# EUROPEAN PATENT SPECIFICATION

(11) **EP 4 304 746 B1**
(45) Date of publication and mention of the grant of the patent: **23.07.2025**
(21) Application number: 21711851.2
(22) Date of filing: 11.03.2021
(51) Int. Cl.: A63B 21/002, A63B 21/005

(54) **MOTOR DRIVEN TRAINING MACHINE**
MOTORGETRIEBENES TRAININGSGERÄT
MACHINE MOTORISÉE D'ENTRAÎNEMENT

(43) Date of publication of application: 17.01.2024
(73) Proprietor: Beijing Pukang Sport & Medical Co., Ltd., Beijing (CN); Hoffmann, Helmut, 94315 Straubing (DE)
(72) Inventor: HOFFMANN, Helmut, 94315 Straubing (DE)
(74) Representative: Grünecker Patent- und Rechtsanwälte PartG mbB
(86) International application number: PCT/EP2021/056237
(87) International publication number: WO 2022/188986

(56) References cited:
- EP-A1- 2 633 888
- WO-A1-2009/107904
- US-A1- 2013 095 978
- US-A1- 2019 344 123

## Description

### Technical Field

The present disclosure relates to training machines. In particular, the present disclosure relates to motor driven training machines.

### Background

Medical Training-Therapy (MTT) is an essential step to recover from an injury or surgery associated with a joint, the core and/or upper or lower extremity and to obtain a normal joint, core and/or upper or lower extremity function for daily activities. During the MTT therapy, training machines for fitness and rehabilitation may be used to assist a user or patient in performing exercises to regain a full range of motion, joint flexibility and strength of the musculoskeletal system.

Known training machines for fitness and rehabilitation comprise plate-loaded, weight stacks, elastic bands and hydraulic/air pressure cylinders training load technologies. Although some of these mechanical training machines may have been effective in recovering from specific injuries, these training machines have been replaced or supplemented by motor driven training machines. These motor driven training machines comprise isometric, isotonic and isokinetic modes and can create a variable force, which imitates and opposes the variable force generated by an involved muscle group of a user throughout its range of motion.

For example, US 5 244 441 A discloses an active isokinetic exercise and rehabilitation system wherein isokinetic velocity is maintained in response to position of and torque applied to a patient attachment unit. However, motor driven training machines that oppose the variable force generated by an involved muscle group may not be the best training machine for rehabilitation from specific injuries. For example, for treating femur-patellar cartilage degeneration or a chronic anterior cruciate ligament (ACL)-instability, or an ACL-rupture, it may be beneficial to perform exercises on a mechanical training machine that is based on a plate-loaded technology for rehabilitation due to the training load specific characteristics and effects of this mechanical training machine.

Accordingly, there is a need to address the problem of providing an improved training machine that efficiently and effectively can be used for strength training and rehabilitation. Additionally, there is a need for a training machine that allows for an increased training variability, which provides for an increased training efficiency. In view of the problem that some exercises or movements are counterproductive or dangerous for a user in view of an injury or a medical condition, there is a need for an improved training machine that can be operated in a safe manner.

WO 2009/107904 A1 discloses a training device for providing various training methods using a rotating member controlled electrically. The training device includes a body member configured to have a frame, a rotating member configured to rotate in response to operation of the frame, and a controller configured to control operation of the rotating member. The controller drives the rotating member in accordance with selected mode of an isotonic mode, an isokinetic mode, an isometric mode, an ROM mode, and a program mode.

D2 US 2019/344123 A1 discloses an exercise device including a base defining an inner volume and a top supported by the base, the top defining an aperture. The exercise device further includes a force sensor configured to measure force on the top and a motor disposed within the base and below the top, the motor including a cable extendable through the aperture. The exercise device further includes a controller communicatively coupled to each of the force sensor and the motor. The controller is adapted to actuate the motor in response to forces applied to the top as measured by the force sensor. The controller may also actuate the motor in response to one or more additional parameters related to the speed or force with which the cable is pulled by a user.

EP 2,633,888 A1 discloses an exercise system that obtains at least one parameter of an ongoing exercise on a fitness equipment unit and adjust at least one operational characteristic of the user interface while a person is exercising based upon the obtained at least one parameter of the ongoing exercise.

US 2013/095978 A1 discloses a training apparatus including a training element for a user performing exercises, an AC motor and a frequency converter being arranged to control the AC motor, wherein the frequency converter comprises measuring means being arranged to measure a voltage and a current of the AC motor and calculation means being arranged to calculate a magnetic state of the AC motor using the measured voltage, the measured current, a reference torque and a reference flux in order to generate a torque of the AC motor.

It is the object of the present invention to provide an improved training machine configured to operate in a safe manner is provided.

This object is solved by the subject matter of the independent claims.

Embodiments are defined by the dependent claims.

To address the challenges in the state of the art, a novel motor driven training machine for simulating a plurality of existing training systems is disclosed.

In an embodiment, a motor driven training machine for simulating a plurality of existing training systems comprises an interface, such as a graphical user interface (e.g. a touchscreen), configured to receive, based on one or more user inputs, a selection of an existing training system from a plurality of existing training systems for an exercise and at least one training parameter for the exercise. Each of the plurality of existing training systems for the exercise is associated with a respective load profile of a plurality of load profiles. The motor driven training machine is configured to simulate the selected existing training system, by controlling one or more motors of the motor driven training machine in accordance with the respective load profiles and the received at least one training parameter. The plurality of existing training systems may comprise one or more of a plate loaded training system, a training system that is based on weight stacks, a training system that is based on weight stacks with integrated synergistic muscle group specific muscle-physiologic max torque (based on muscle length) adaptation by a scientifically proven EXZENTER (CAM), a training system that is based on elastic bands, a training system that is based on hydraulic cylinders, a training system that is based on air pressure cylinders, and a training system that is based on an electric-motor. The at least one training parameter may define at least one of a maximum resistive force, a maximum velocity, a range of motion and a maximum torque. Each of the plurality of load profiles may be associated with at least one of an isometric mode, an isotonic mode and an isokinetic mode of the motor driven training machine.

By simulating the selected existing training system, by controlling one or more motors of the motor driven training machine in accordance with the respective load profiles and the received at least one training parameter, an improved motor driven training machine for efficient and effective strength training and rehabilitation is provided. The motor driven training machine allows for an increased training variability, individual, indication specific optimized training loads and provides an increased training efficiency.

According to aspects, the motor driven training machine comprises processing means configured to receive an identification of a user of the motor driven training machine, and to obtain data comprising information associated with a joint and/or upper or lower extremity of the user. The information associated with the joint and/or upper or lower extremity of the user may comprise information about at least one of an injury related to the joint and/or upper or lower extremity of the user, a time related to the injury, joint-specific aspects, an indication regarding a stability of the joint and/or upper or lower extremity of the user, a medical condition regarding the joint and/or upper or lower extremity of the user, a concentric-eccentric strength ratio of the user, and a flexor-extensor ratio of the user. The processing means may further be configured to determine one or more restrictions for training parameters of the motor driven training machine for the exercise based at least in part on the information associated with the joint and/or upper or lower extremity of the user. The processing means may be configured to determine one or more recommended training parameters for the exercise based at least in part on the information associated with the joint and/or upper or lower extremity of the user, and wherein the interface is configured to display the one or more determined recommended training parameter for selection by a user. The data may further comprise additional user information, comprising at least one of an age of the user, a gender of the user, a height of the user, a weight of the user and a sport of the user. The motor driven training machine may be configured to determine at least one recommended training parameter for the exercise based at least in part on the additional user information for selection by a user.

The motor driven training machine is configured to indicate at least one alarm based on at least one of the selection, the received at least one training parameter and the information associated with the joint and/or upper or lower extremity of the user. The at least one alarm may comprise at least one of a reminder regarding the information associated with the joint and/or upper or lower extremity of the user, a restriction regarding one or more training parameters of the training parameters, and an exclusion of the exercise or of a simulation of an existing training systems and/or a suggestion of a different exercise or a different existing training system. The reminder may represent a first level of the at least one alarm, the restriction may represent a second level of the at least one alarm and the exclusion may represent a third level of the at least one alarm. The level of the at least one alarm may be determined based on at least one of the selection, the received at least one training parameter and the information associated with the joint and/or upper or lower extremity of the user.

By indicating the at least one alarm, an improved training machine configured to operate in a safe manner is provided. In particular, the motor driven training machine can protect from injuries and/or overload, and the motor driven training machine allows better coaching independent of the trainer qualification.

In aspects, the motor driven training machine comprises a radio-frequency identification, RFID, reader component configured to automatically identify a tag associated with the user of the motor driven training machine. Alternatively, the user of the motor driven training machine is identified based on a user input.

According to aspects, the motor driven training machine is further configured to automatically adjust at least one movable component, such as a seat, of the motor driven training machine based on biometric data of the user.

In aspects, the at least one training parameter may define a range of motion for at least one movable component, such as a lever arm assembly, of the motor driven training machine. The motor driven training machine may comprise at least one of (i) a plurality of light sources configured to indicate the range of motion for the at least one movable component of the motor driven training machine, (ii) a first safety component configured to electronically restrict the motion of the user based on the range of motion for the at least one movable component of the motor driven training machine, and (iii) a second safety component configured to mechanically restrict the motion of the user based on the range of motion for the at least one movable component of the motor driven training machine.

The computer-implemented method comprises the steps of receiving an identification of a user of a motor driven training machine for simulating a plurality of existing training systems by controlling a motor of the motor driven training machine in accordance with load profiles, obtaining information about the user based on the identification of the user, receiving, based on one or more user inputs, a selection of an existing training system from a plurality of existing training systems for an exercise and at least one training parameter for the exercise, determining, based on the information about the user, at least one of one or more restrictions of training parameters for the exercise and an exclusion of an exercise, and determining an alarm condition when at least one of the selection and the received at least one training parameter or a part of the selection and the received at least one training parameter fall under the at least one of the one or more restrictions of training parameters for the exercise and the exclusion of the exercise. The information about the user may comprise at least one of an age of the user, a gender of the user, a height of the user, a weight of the user, a sport of the user, an injury related to a joint and/or upper or lower extremity of the user, a time related to the injury, joint-specific aspects, an indication regarding a stability of the joint and/or upper or lower extremity of the user, a medical condition regarding the joint and/or upper or lower extremity of the user, a concentric-eccentric strength ratio of the user, and a flexor-extensor ratio of the user. Each of the plurality of existing training systems for the exercise may be associated with a respective load profile of the load profiles.

In an embodiment, a computer-readable storage medium comprises instructions which, when executed by a computer, cause the computer to carry out the steps of the method.

The following detailed description and accompanying drawings provide a more detailed understanding of the nature and advantages of the present invention.

### Brief Description of the Figures

The accompanying drawings are incorporated into and form a part of the specification for the purpose of explaining the principles of the embodiments. The drawings are not to be construed as limiting the embodiments to only the illustrated and described embodiments of how they can be made and used. Further features and advantages will become apparent from the following and more particularly from the description of the embodiments, as illustrated in the accompanying drawings, wherein:
**Fig. 1** illustrates a motor driven training machine for simulating a plurality of existing training systems in accordance with at least one embodiment,
**Fig. 2** illustrates configurations of motor driven training machines for simulating a plurality of existing training systems in accordance with at least one embodiment,
**Fig. 3** illustrates an overview of milestones of existing training systems and respective training load specific characteristics and effects,
**Fig. 4** illustrates different example views shown on a graphical user interface of the motor driven training machine, and
**Fig. 5** illustrates a process flow diagram of an exemplary method for determining an alarm condition associated with an exercise to be performed on a motor driven training machine in accordance with the invention.

### Detailed Description

Described herein are motor driven training machines for simulating a plurality of existing training systems. For purposes of explanation, numerous examples and specific details are set forth in order to provide a thorough understanding of the described embodiments.

The illustrative embodiments will be described with reference to the drawings wherein elements and structures are indicated by reference numbers. Further, where an embodiment is a method, steps and elements of the method may be combinable in parallel or sequential execution. As far as they are not contradictory, all embodiments described below can be combined with each other.

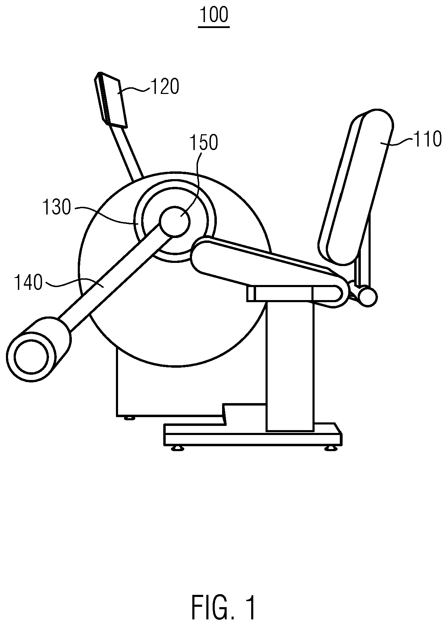

**Fig. 1** illustrates a motor driven training machine 100 for simulating a plurality of existing training systems for an exercise (e.g. a single exercise, such as a leg extension exercise or a leg curl exercise) according to an embodiment.

The motor driven training machine 100 comprises an interface 120, such as a graphical user interface (GUI), configured to receive, based on one or more user inputs, a selection of an existing training system from a plurality of existing training systems for an exercise and at least one training parameter for the exercise. A user, e.g. a patient, an athlete, a therapist, or a trainer, may select the existing training system. Each of the plurality of existing training systems for the single exercise is associated with a respective load profile of a plurality of load profiles.

The motor driven training machine 100 is configured to simulate the selected existing training system, by controlling one or more motors of the motor driven training machine in accordance with the respective load profiles and the received at least one training parameter. The simulation may comprise simulating specific training loads, load characteristics and/or load effects of the existing training systems. For example, the motor driven training machine 100 may simulate one or more of plate loaded, weight stacks, weight stack with integrated synergistic muscle group specific muscle-physiologic max torque (based on muscle length) adaptation by a scientific proven EXZENTER (CAM), elastic bands, hydraulic cylinders, air pressure cylinders, and electric-motor training load technologies or existing training systems comprising these technologies. The existing training systems may comprise at least one of existing mechanical training systems and existing motor driven training systems for fitness and rehabilitation.

The at least one training parameter for the exercise can define a range of motion for at least one movable component, such as lever arm assembly 140, of the motor driven training machine. Additionally or alternatively, the at least one training parameter for the exercise can define a maximum resistive force, a maximum velocity and/or a maximum torque.

The motor driven training machine 100 may comprise a plurality of light sources 130, such as LEDs, configured to indicate the range of motion for the at least one movable component, such as lever arm assembly 140, of the motor driven training machine 100. For example, each position of a light source may correspond to a respective range of motion and only light sources within the range of motion defined by the at least one training parameter may be switched on during an exercise. Additionally or alternatively, the motor driven training machine 100 may comprise at least one of a first safety component configured to electronically restrict the motion of the user or the at least one movable component, such as lever arm assembly 140, based on the selected or defined range of motion for the at least one movable component of the motor driven training machine 100, and a second safety component configured to mechanically restrict the motion of the user based on the range of motion for at least one movable component of the motor driven training machine.

In an embodiment, the motor driven training machine 100 comprises an isometric mode, an isotonic mode and an isokinetic mode, in which exercises can be performed. The isometric, isotonic and isokinetic modes may be used for training and/or testing. For example, the motor driven training machine 100 may be configured to process the training data, obtained from exercises performed on the motor driven training machine 100, to determine a training progress of the user or to perform performance diagnostics. The motor driven training machine 100 may analyze the data or send the data via a network to a server for further processing.

Isometric exercises comprise a type of low-impact exercises that involve straining muscles of a user of the motor driven training machine 100 without moving or bending joints of the user. Isometric exercises are good for maintaining a person's strength and stability and are often recommended for people who are recovering from an injury, or who suffer from joint pain like arthritis.

Isotonic exercises involve putting a constant amount of weight or tension on the muscles of the user, while moving the joints of the user through a full range of motion. An example is simulating a bench-pressing-system by the motor driven training machine 100, where the amount of weight stays the same and the joints of the user can be bent and straighten all the way during the exercise. Isotonic exercises can help strengthen and build muscles so that an athlete can move through all types of motion with greater ease.

Isokinetic exercises comprise a type of workout that involves specialized motor driven training machines, such as motor driven training machine 100, which may be configured to keep muscles of the user moving at a consistent speed. This can help athletes like baseball pitchers or javelin throwers learn to use their maximum force at higher speeds. Isokinetic exercises can also be used to assess the muscle function of athletes or people with specific injuries.

The motor driven training machine 100 comprises processing means, which may be configured to receive an identification of a user of the motor driven training machine. For example, the motor driven training machine 100 may comprise a radio-frequency identification (RFID) reader component configured to automatically identify a tag identifying the user of the motor driven training machine 100 and provide the identification of the user. In aspects, the user of the motor driven training machine 100 may be identified based on a user input from the user or another user.

Additionally, the processing means may be configured to obtain data comprising information associated with a joint and/or upper or lower extremity of the user. The information associated with the joint and/or upper or lower extremity of the user may comprise information about at least one of an injury related to the joint and/or upper or lower extremity of the user, a time related to an injury of the joint and/or upper or lower extremity of the user, joint-specific aspects, an indication regarding a stability of the joint and/or upper or lower extremity of the user, a medical condition regarding the joint and/or upper or lower extremity of the user, a concentric-eccentric strength ratio of the user, and a flexor-extensor ratio of the user. The processing means can be configured to determine one or more restrictions for the training parameters of the motor driven training machine for the exercise based at least in part on the information associated with the joint and/or upper or lower extremity of the user. Alternatively or additionally, the processing means may be configured to determine at least one recommended training parameter for the motor driven training machine for the exercise based at least in part on the information associated with the joint and/or upper or lower extremity of the user for the selection. The recommended training parameter may be displayed on the graphical user interface 120 for a selection by a user.

In an embodiment, the motor driven training machine is configured to determine at least one recommended training parameter for the motor driven training machine for the exercise, based on at least one of the information associated with a joint and/or upper or lower extremity of the user and additional user information. The additional user information may comprise at least one of an age of the user, a gender of the user, a height of the user, a weight of the user and a sport of the user.

In embodiments, the motor driven training machine 100 comprises artificial intelligence to determine the one or more restrictions for the training parameters of the motor driven training machine for the exercise based at least in part on the information associated with the joint and/or upper or lower extremity of the user, and/or to determine at least one recommended training parameter for the motor driven training machine for the exercise based at least in part on the information associated with the joint and/or upper or lower extremity of the user for the selection.

The motor driven training machine 100 may comprise at least one movable component 110 for supporting the user of the motor driven machine 100. For example, the at least one movable component 110 may form or may be part of a support structure, such as a seat. The motor driven training machine 100 may automatically adjust the at least one movable component 110 based on biometric information of the user. The biometric information may be comprised in the data obtained by the processing means of the motor driven machine 100. For example, the motor driven training machine 100 may obtain biometric information, such as a height, a length of one or more body parts or the weight, of the user and move one or more movable components of the at least one movable component 110 so that an axis relating to a joint and/or upper or lower extremity of the user corresponds to an axis 150 of the motor driven training machine 100. The axis 150 may be an axis of rotation for a lever arm assembly 140 of the motor driven training machine 100. The motor driven training machine 100 may comprise one or more lever arm assemblies 140. The lever arm assembly 140 may be driven by one or more motors and a controller of the motor driven training machine 100. The one or more motors and the controller may be configured to regulate, a velocity of the lever arm assembly, or a training load or training resistance of the motor driven training machine 100 based on a selected existing training system and/or at least one selected training parameter for an exercise.

The motor driven training machine 100 may receive a selection of an existing training system and may receive training parameters, e.g. via the graphical user interface. The selection and/or the received training parameters may be accepted after comparing the selection and/or the received training parameters with restrictions and exclusions, which may be determined for the exercise based on the information about the user. The motor driven training machine 100 may use the training parameters to control the velocity of and/or torque applied to the lever arm assembly 140 or to control a resistance for a movement of the lever arm assembly 140.

**Fig**. **2** illustrates three different configurations of the motor driven training machine. A first configuration 202 of the motor driven training machine may be used to perform a first exercise, such as a leg extension exercise. A second configuration 204 of the motor driven training machine may be used to perform a second exercise, such as a leg curl exercise, and a third configuration 206 of the motor driven training machine may be used to perform a third exercise, such as an abdominal exercise. The motor driven training machine may simulate a plurality of different existing training systems for each of the first, second or third exercise. Other configurations of the motor driven training machine may be used to perform exercises, such as a back extension exercise, a seated chest press exercise, a seated rowing exercise, a lateral pull exercise, a triceps press exercise, a leg press exercise, a hip extension exercise, a hip flexion exercise and a hip adduction exercise.

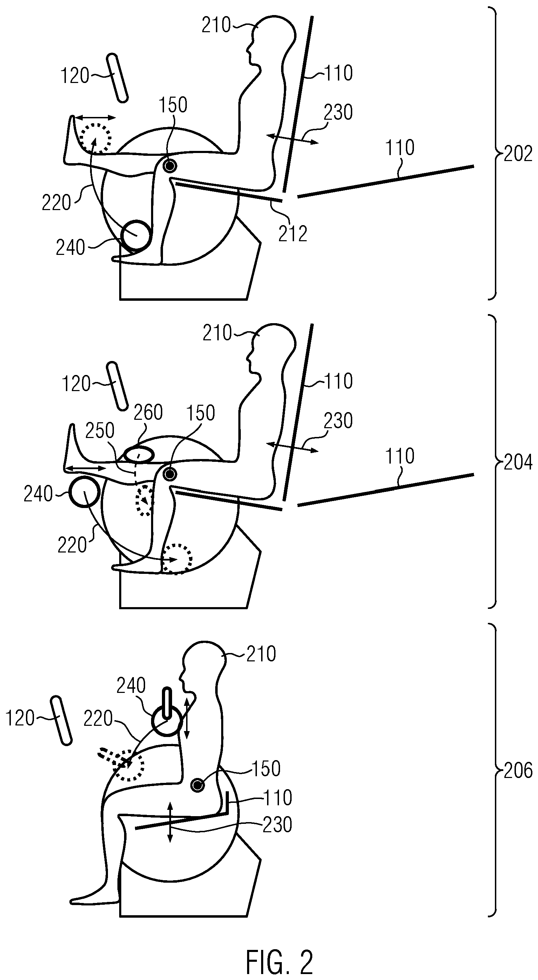

The main axis 150 of the motor driven training machine may be aligned with a joint, e.g. the knee joint of a user 210 for the first and second configuration 202 and 204. A movable component 110, which is a movable contact point of the user 210 may be used to position the user 210, e.g. by performing an actuator adjustment 230. This actuator adjustment may be performed automatically in response to an identification of the user 210, and may be based on biometric information about the user 210. The actuator adjustment can be used to align a joint of the user 210 with the main axis, as, for example, shown for the third configuration 206 in Fig. 2. The motor driven training machine may further comprise one or more passive contact points 212 to position the user 210. Other movable contact points 240 and 260 may be used to perform an exercise. For example, movable contact points 240 and 260 may be part of the lever arm assembly 140. Movable contact point 240 may be moved by the user during an exercise motion and movable contact point 260 may be moved in accordance with a passive adjustment.

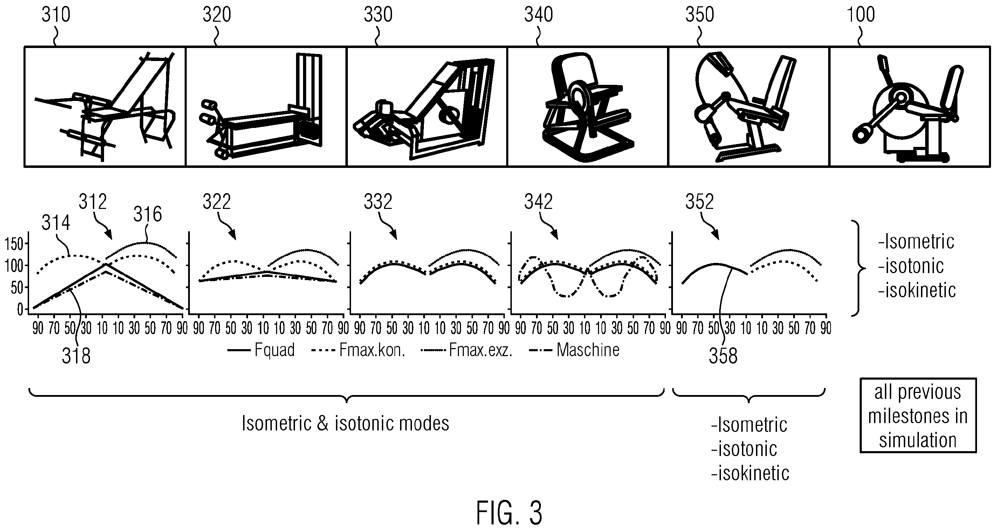

**Fig. 3** illustrates an overview of milestones of existing training systems and respective specific training loads, characteristics and effects of the existing training systems. The motor driven training machine 100 according to embodiments can be configured to simulate these existing training systems or at least a specific training load, characteristic and effect of the existing training systems. The motor driven training machine may be configured to simulate plate loaded, weight stacks, a weight stack with integrated specific muscle-physiologic maximum torque, elastic bands, hydraulic cylinders, air pressure cylinders or electric-motor training load technologies.

The existing strength training systems vary in their respective load or force profiles, and provide different benefits when used for rehabilitation. Each existing technical solution realizes training resistance with specific consequences and characteristics.

A maximum force of a muscle of a user depends on an angle of a joint corresponding to the muscle and the type of muscle contraction (e.g. concentric or eccentric contraction), as can be seen in graphs 312, 322, 332, 342 and 352. Graph 312 shows a force profile 314 of a maximum force of a user for a concentric contraction while moving the joint (e.g. knee joint) of the user through a full range of motion. Force profile 316 corresponds to a maximum force of the user for an eccentric contraction and depends on an angle of the joint. Force profiles 314 and 316 depend on the strength of the user and are the same for graphs 312, 322, 332, 342 and 352 relating to different existing training systems, but the same exercise and movement sequence of the joint of the user.

Different strength training systems may exert a different force depending on an angle of a joint, as shown in the graphs of Fig. 3. For example, an existing mechanical training system 310, which is based on a plate loaded technology, provides a different force or load profile 318 (see graph 312) compared to a force or load profile 358 of an existing motor driven training system 350 (see graph 352). Since the load of an existing motor driven training system 350 can be set individually depending on an angle, the load profile 358 may correspond to the eccentric and concentric force profiles 314 and 316. Other existing training systems, such as existing mechanical training system 320, which is based on a weight stack technology, or existing mechanical training system 330 and 340 may each be associated with a different load profile.

Existing strength training systems may have positive and/or negative effects on muscles and/or joints for specific exercises. For example, existing mechanical training system 310, which is based on a plate-loaded technology, may be more suitable for a user with a specific knee injury compared to existing training system 330. By simulating various existing mechanical training system, such as existing mechanical training system 310 to 350, which may be regarded as milestones in strength training equipment design and function, the motor driven training machine according to embodiments enables a high variation in exercise and allows individual and injury specific medical training protocols. Different existing mechanical training system may be simulated for fitness and rehabilitation. Additionally, by simulating existing training systems by controlling one or more motors of the motor driven training machine in accordance with the respective load profile of the existing training system, a user may feel the same effects and load characteristics of the existing training system and experience that has been gained on such an existing training system can be applied to the motor driven training machine according to embodiments.

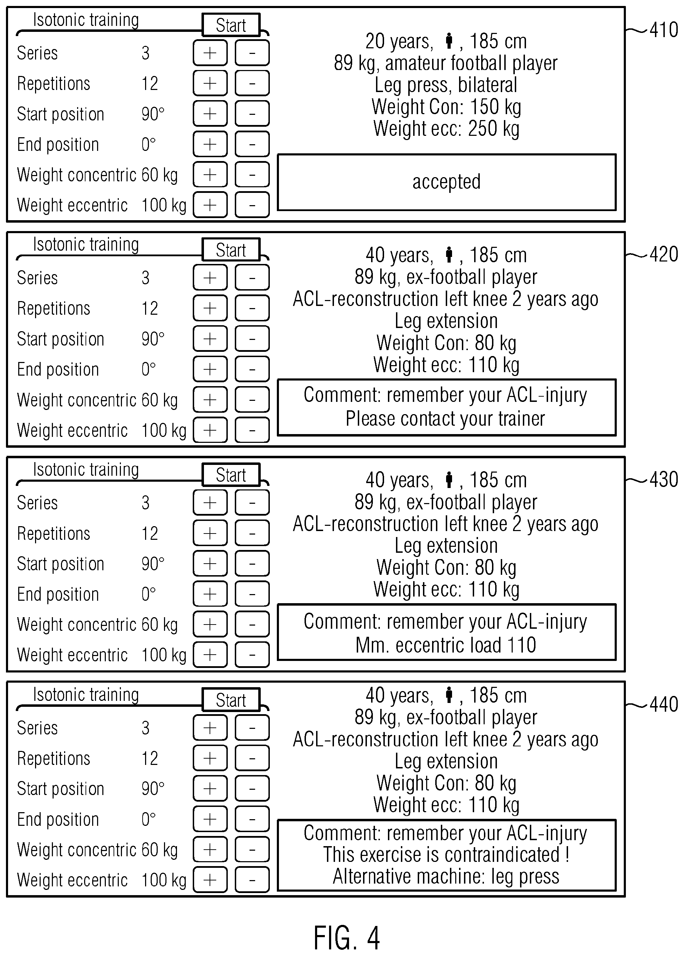

**Fig. 4** illustrates different example views 410 to 440 that may be shown on a graphical user interface of the motor driven training machine. The graphical user interface may be configured to display a section for selecting at least one of (i) an exercise, (ii) an existing training system or a load profile associated with the existing training system, (iii) a training mode (e.g. isotonic, isometric or isokinetic training or testing), and (iv) at least one training parameter (e.g. the number of series, the number of repetitions, a start position, an end position, a weight for a concentric contraction and a weight for an eccentric contraction). Additionally, the graphical user interface may be configured to display user information about the user using the motor driven training machine. The user information may comprise at least one of an age, a height, a weight, a sport and an injury or a medical condition of the user. In embodiments, the exercise may be preselected and cannot be selected.

Additionally, the graphical user interface may be configured to display a button for a selection, such as the "Start"-button shown in example views 410 to 440. In response to selecting, an exercise, an existing training system and/or at least one training parameter, a notification may be displayed. For example, as shown in view 410, an approval notification may be shown to the user, accepting the selection. Alternatively, an alarm notification may be shown to the user as shown in views 420, 430 and 440.

The motor driven training machine is configured to indicate at least one alarm based on the selection of an existing training system and information associated with a joint and/or upper or lower extremity of the user. For example, the graphical user interface may be configured to display the at least one alarm, e.g. by displaying a notification. Alternatively or additionally, the at least one alarm may be indicated by a loudspeaker in the form of an acoustic signal or by a light source, such as a led, in the form of an optical signal. The at least one alarm may comprise at least one of a reminder regarding the information associated with the joint and/or upper or lower extremity of the user (as shown in view 420), a restriction regarding one or more training parameters of the training parameters (as shown in view 430), and an exclusion of an exercise or an exclusion of a simulation of an existing training systems and/or a suggestion of a different exercise (as shown in view 440). The reminder may represent a first level of the at least one alarm, the restriction may represent a second level of the at least one alarm and the exclusion may represent a third level of the at least one alarm. The level of the at least one alarm may be determined based on the selection of an exercise and information associated with a joint and/or upper or lower extremity of the user. The information associated with a joint and/or upper or lower extremity of the user may comprise at least one of medical contraindications, a characteristic of an isokinetic force curve, a concentric-eccentric maximum force ratio, an extensor-flexor maximum force ratio and individual objectives. For example, the level of the at least one alarm may be determined as shown in **Table 1,** where an alarm level is determined based on an indication regarding a stability of a joint of the user, such as a KT1000 value, associated with a contraindication, such as a chronic anterior cruciate ligament (ACL)-instability, or a time a contraindication, such as an ACL-rupture, has occurred. Alternatively, it may be determined that exercises are excluded based on a contraindication, as shown for the bone bruise.

**Table 1 shows relations between contraindications and alarm levels.**

| Contraindication | First alarm level (restriction level 1; notice of problem) | Second alarm level (restriction level 2; partly restriction exclusion) | Third alarm level (restriction level 3; exercise exclusion) |
|---|---|---|---|
| Bone bruise | | | X |
| ACL rupture | longer than 3 years ago | 0,5 to 3 years ago | less than 6 month ago |
| chronic ACL-instability | KT1000 from v1 till v2 | KT1000 from v2 till v3 | KT1000 from v3 till v4 |
| Acute meniscus-revision/surgery | | | |
| ... | | | |

As shown in table 2, the level of the alarm may additionally be based on a gender of the user. Other additional factors that may be considered when determining an alarm level may be an age of the user or a sport played by the user.

**Table 2 shows relations between contraindications and alarm levels.**

| Contraindication | gender | First alarm level (restriction level 1; notice of problem) | Second alarm level (restriction level 2; partly restriction exclusion) | Third alarm level (restriction level 3; exercise exclusion) |
|---|---|---|---|---|
| Bone bruise | male | | | X |
| | female | | | X |
| ACL rupture | male | longer than 3 years ago | 0,5 to 3 years ago | less than 6 month ago |
| | female | longer than 4 years ago | 0,5 to 4 years ago | less than 6 month ago |
| chronic ACL-instability | male | KT1000 from vm1 till vm2 | KT1000 from vm2 till vm3 | KT1000 from vm3 till vm4 |
| | female | KT1000 from vf1 till vf2 | KT1000 from vf2 till vf3 | KT1000 from vf3 till vf4 |

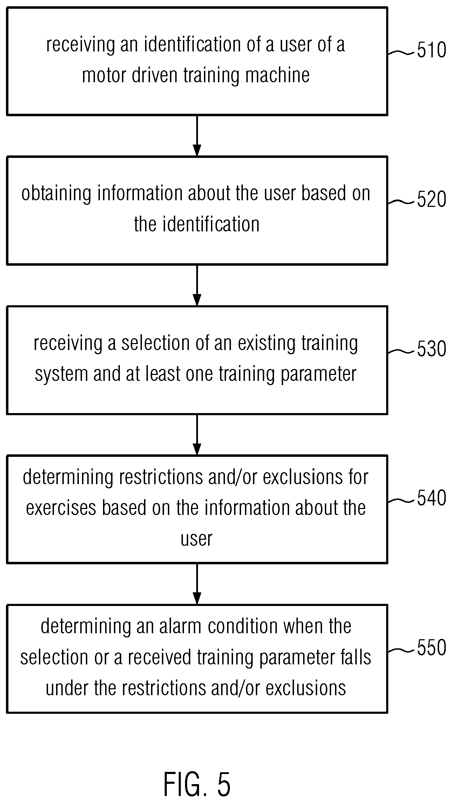

**Fig. 5** is a process flow diagram of an exemplary method 500 for determining an alarm condition associated with an exercise to be performed on a motor driven training machine. The method 500 comprises receiving an identification of a user of a motor driven training machine, at step 510. The motor driven training machine may be used to simulate a plurality of existing training systems by controlling a motor of the motor driven training machine in accordance with load profiles, wherein each of the plurality of existing training systems for the exercise is associated with a respective load profile of the load profiles.

At step 520, information about the user is obtained based on the identification of the user. The information about the user comprises at least one of an age of the user, a gender of the user, a height of the user, a weight of the user, a sport of the user, an injury related to a joint and/or upper or lower extremity of the user, a time related to the injury, joint-specific aspects, an indication regarding a stability of the joint and/or upper or lower extremity of the user, a medical condition regarding the joint and/or upper or lower extremity of the user, a concentric-eccentric strength ratio of the user, and a flexor-extensor ratio of the user.

In step 530, based on one or more user inputs, a selection of an existing training system from a plurality of existing training systems for an exercise and at least one training parameter for the exercise are received.

At step 540, restrictions and/or exclusions for exercises are determined based on the information about the user. For example, specific exercises or specific settings (training parameters) may be determined to be excluded for a user associated with a medical contraindication, such as a specific injury or medical condition. The medical contraindication may be a condition or factor that serves as a reason to exclude or restrict an exercise on the motor driven training machine, due to the harm that it would cause the user or patient.

At step 550, an alarm condition is determined when at least one of the selection and the received at least one training parameter or a part of the selection and the received at least one training parameter fall under the at least one of the one or more restrictions of training parameters for the exercise and the exclusion of the exercise. The criteria for the alarm or alarm condition may be determined based on at least one of medical contraindications, a characteristic of an isokinetic force curve, a concentric-eccentric maximum force ratio, an extensor-flexor maximum force ratio and individual objectives of the user.

In an embodiment, a computer-readable storage medium having computer-executable instructions stored thereon is provided. When executed by one or more processors, the computer-executable instructions perform the method 500 for determining an alarm condition associated with an exercise to be performed on a motor driven training machine.

In a further embodiment, an apparatus comprising processing circuitry is provided. The processing circuitry is configured to execute method 500 for determining an alarm condition associated with an exercise to be performed on a motor driven training machine.

While some specific embodiments have been described in detail above, it will be apparent to those skilled in the art that various modifications, variations, and improvements of the embodiments may be made in light of the above teachings and within the content of the appended claims without departing from the intended scope of the embodiments. In addition, those areas in which it is believed that those of ordinary skill in the art are familiar have not been described herein in order to not unnecessarily obscure the embodiments described herein. Accordingly, it is to be understood that the embodiments are not to be limited by the specific illustrative embodiments, but only by the scope of the appended claims.

Although some of the above embodiments have been described in the context of method steps, they also represent a description of a corresponding component, module or feature of a corresponding apparatus or system. Some or all of the method steps may be implemented by a computer in that they are executed by (or using) a processor, a microprocessor, an electronic circuit or processing circuitry. The embodiments described above may be implemented in hardware or in software. The implementation can be performed using a non-transitory storage medium such as a computer-readable storage medium, for example a CD or a FLASH memory. Such computer-readable media can be any available media that can be accessed by a general-purpose or special-purpose computer system.

Generally, embodiments can be implemented as a computer program product with a program code or computer-executable instructions, the program code or computer-executable instructions being operative for performing one of the methods when the computer program product runs on a computer. The program code or the computer-executable instructions may be stored on a computer-readable storage medium. In an embodiment, a storage medium (or a data carrier, or a computer-readable medium) comprises, stored thereon, the computer program or the computer-executable instructions for performing one of the methods described herein when it is performed by a processor. In a further embodiment, an apparatus comprises one or more processors and the storage medium mentioned above.

In a further embodiment, an apparatus, such as the motor driven training machine or a computer for the motor driven training machine, comprises means, for example processing circuitry like, e.g., a processor communicating with a memory, the means being configured to, or adapted to perform one of the methods described herein.

A novel motor driven training machine for simulating a plurality of existing training systems is disclosed. The motor driven training machine represents a high-end strength training system for medical training therapy, prevention and performance training. The motor driven training machine is configured to assist in planning a training, controlling a training and documenting the training and effects of the training of a user. The motor driven training machine is configured to automatically position a user correctly based on an individual anatomic of the user. The motor driven training machine allows for an increased training variability (e.g. uni-/bilateral, concentric/concentric, concentric/eccentric and isometric/isotonic/isokinetic training), which provides an increased training efficiency and allows to create an optimized individual and indication-specific MTT-protocol. Further, the motor driven training machine protects from injuries and/or overload. Additionally, the motor driven training machine allows improved coaching independent of the qualification of the supervising trainer or therapist.

## Claims

1. A motor driven training machine (100) for simulating a plurality of existing training systems (310-350) for an exercise, the motor driven training machine (100) comprising:
an interface (120) configured to receive, based on one or more user inputs, a selection of an existing training system (310-350) from a plurality of existing training systems (310-350) for an exercise and at least one training parameter for the exercise, wherein each of the plurality of existing training systems (310-350) for the exercise is associated with a respective load profile of a plurality of load profiles (312-352),
wherein the motor driven training machine (100) is configured to simulate the selected existing training system (310-350), by controlling one or more motors of the motor driven training machine in accordance with the respective load profile and the received at least one training parameter;
**characterised by**
processing means configured to:
receive an identification of a user (210) of the motor driven training machine (100); and
obtain data comprising information associated with a joint and/or upper or lower extremity of the user (210) based on the identification,
wherein the motor driven training machine (100) is further configured to indicate at least one alarm based on the selection and the information associated with the joint and/or upper or lower extremity of the user (210).

2. The motor driven training machine of claim 1, wherein the motor driven training machine is further configured to indicate the at least one alarm based on the received at least one training parameter.

3. The motor driven training machine of claim 1 or claim 2, wherein the at least one alarm comprises at least one of:
a reminder regarding the information associated with the joint and/or upper or lower extremity of the user;
a restriction regarding one or more training parameters of the at least one training parameter; and
an exclusion of the exercise or of a simulation of an existing training systems and/or a suggestion of a different exercise or a different existing training system.

4. The motor driven training machine of claim 3, wherein the reminder represents a first level of the at least one alarm, the restriction represents a second level of the at least one alarm and the exclusion represents a third level of the at least one alarm, wherein the level of the at least one alarm is determined based on at least one of the selection, the received at least one training parameter and the information associated with the joint and/or upper or lower extremity of the user.

5. The motor driven training machine of claim 1, wherein the processing means are further configured to determine one or more restrictions for training parameters of the motor driven training machine for the exercise based at least in part on the information associated with the joint and/or upper or lower extremity of the user.

6. The motor driven training machine of one of claims 1 to 5, wherein the processing means are further configured to determine one or more recommended training parameters for the exercise based at least in part on the information associated with the joint and/or upper or lower extremity of the user, and wherein the interface is configured to display the one or more determined recommended training parameter for selection by a user, and/or
wherein the motor driven training machine is further configured to determine at least one recommended training parameter for the exercise based at least in part on additional user information for selection by a user, wherein the data further comprises the additional user information, comprising at least one of an individual injury-history, an age of the user, a gender of the user, a height of the user, a weight of the user and a sport of the user.

7. The motor driven training machine of one of claims 1 to 6, wherein the motor driven training machine comprises a radio-frequency identification, RFID, reader component configured to automatically identify a tag associated with the user of the motor driven training machine, or
wherein the user of the motor driven training machine is identified based on a user input.

8. The motor driven training machine of one of claims 1 to 7, wherein the information associated with the joint and/or upper or lower extremity of the user comprises information about at least one of an injury related to the joint and/or upper or lower extremity of the user, a time related to the injury, joint-specific and/or upper or lower extremity-specific aspects, an indication regarding a stability of the joint and/or upper or lower extremity of the user, a medical condition regarding the joint and/or upper or lower extremity of the user, a concentric-eccentric strength ratio of the user, and a flexor-extensor ratio of the user.

9. The motor driven training machine of one of claims 1 to 8, wherein the motor driven training machine is further configured to automatically adjust at least one movable component of the motor driven training machine based on biometric data of the user.

10. The motor driven training machine of one of claims 1 to 9, wherein the plurality of existing training systems comprise one or more of a plate loaded training system, a training system that is based on weight stacks, a training system that is based on muscle-specific length adapted variation of torque during movements, a training system that is based on elastic bands, a training system that is based on hydraulic cylinders, a training system that is based on air pressure cylinders, and a training system that is based on an electric-motor.

11. The motor driven training machine of one of claims 1 to 10, wherein the at least one training parameter defines at least one of a maximum resistive force, a maximum velocity, a range of motion and a maximum torque, and/or
wherein the at least one training parameter defines a range of motion for at least one movable component of the motor driven training machine, and wherein the motor driven training machine comprises at least one of:
(i) a plurality of light sources configured to indicate the range of motion for the at least one movable component of the motor driven training machine,
(ii) a first safety component configured to electronically restrict the motion of the user based on the range of motion for the at least one movable component of the motor driven training machine, and
(iii) a second safety component configured to mechanically restrict the motion of the user based on the range of motion for the at least one movable component of the motor driven training machine.

12. The motor driven training machine of one of claims 1 to 11, wherein each of the plurality of load profiles is associated with at least one of an isometric mode, an isotonic mode and an isokinetic mode.

13. A computer-implemented method comprising the steps of:
receiving (510) an identification of a user of a motor driven training machine according to claim 1; obtaining (520) information about the user based on the identification of the user, wherein the information about the user comprise at least one of an age of the user, a gender of the user, a height of the user, a weight of the user, a sport of the user, an injury related to a joint and/or upper or lower extremity of the user, a time related to the injury, joint-specific and/or upper or lower extremity-specific aspects, an indication regarding a stability of the joint and/or upper or lower extremity alignment of the user, a medical condition regarding the joint and/or upper or lower extremity of the user, a concentric-eccentric strength ratio of the user, and a flexor-extensor ratio of the user;
receiving (530), based on one or more user inputs, a selection of an existing training system from a plurality of existing training systems for an exercise and at least one training parameter for the exercise;
determining (540), based on the information about the user, at least one of one or more restrictions of training parameters for the exercise and an exclusion of an exercise; and
determining (550) an alarm condition when at least one of the selection and the received at least one training parameter or a part of the selection and the received at least one training parameter fall under the at least one of the one or more restrictions of training parameters for the exercise and the exclusion of the exercise.

14. A computer-readable storage medium comprising instructions which, when executed by a computer, cause the computer to carry out the steps of the method of claim 13.

## Patentansprüche

1. Eine motorgetriebene Trainingsmaschine (100) zum Simulieren einer Vielzahl von bestehenden Trainingssystemen (310-350) für eine Übung, wobei die motorgetriebene Trainingsmaschine (100) aufweist:
eine Schnittstelle (120), die so konfiguriert ist, dass sie, basierend auf einer oder mehreren Benutzereingaben, eine Auswahl eines bestehenden Trainingssystems (310-350) aus einer Vielzahl von bestehenden Trainingssystemen (310-350) für eine Übung und mindestens einen Trainingsparameter für die Übung empfängt, wobei jedes der Vielzahl von bestehenden Trainingssystemen (310-350) für die Übung mit einem jeweiligen Lastprofil aus einer Vielzahl von Lastprofilen (312-352) verbunden ist,
wobei die motorgetriebene Trainingsmaschine (100) so konfiguriert ist, dass sie das ausgewählte bestehende Trainingssystem (310-350) simuliert, indem sie einen oder mehrere Motoren der motorgetriebenen Trainingsmaschine in Übereinstimmung mit dem jeweiligen Lastprofil und dem empfangenen mindestens einen Trainingsparameter steuert;
**gekennzeichnet durch**
Verarbeitungsmittel, die konfiguriert sind, um:
eine Identifikation eines Benutzers (210) der motorgetriebenen Trainingsmaschine (100) zu empfangen; und
Daten zu erhalten, die Informationen aufweisen, die mit einem Gelenk und/oder einer oberen oder unteren Extremität des Benutzers (210) verbunden sind, basierend auf der Identifikation,
wobei die motorgetriebene Trainingsmaschine (100) ferner so konfiguriert ist, dass sie mindestens einen Alarm auf der Grundlage der Auswahl und der mit dem Gelenk und/oder der oberen oder unteren Extremität des Benutzers (210) verbundenen Informationen anzeigt.

2. Die motorgetriebene Trainingsmaschine nach Anspruch 1, wobei die motorgetriebene Trainingsmaschine ferner so konfiguriert ist, dass sie den mindestens einen Alarm auf der Grundlage des empfangenen mindestens einen Trainingsparameters anzeigt.

3. Die motorgetriebene Trainingsmaschine nach Anspruch 1 oder Anspruch 2, wobei der mindestens eine Alarm mindestens eines der folgenden Merkmale aufweist:
eine Erinnerung bezüglich der Informationen, die mit dem Gelenk und/oder der oberen oder unteren Extremität des Benutzers verbunden sind
eine Einschränkung bezüglich eines oder mehrerer Trainingsparameter des mindestens einen Trainingsparameters; und
einen Ausschluss der Übung oder einer Simulation eines bestehenden Trainingssystems und/oder einen Vorschlag für eine andere Übung oder ein anderes bestehendes Trainingssystem.

4. Die motorgetriebene Trainingsmaschine nach Anspruch 3, wobei die Erinnerung eine erste Stufe des mindestens einen Alarms darstellt, die Einschränkung eine zweite Stufe des mindestens einen Alarms darstellt und der Ausschluss eine dritte Stufe des mindestens einen Alarms darstellt, wobei die Stufe des mindestens einen Alarms auf der Basis von mindestens einer der Auswahl, des empfangenen mindestens einen Trainingsparameters und der mit dem Gelenk und/oder der oberen oder unteren Extremität des Benutzers assoziierten Informationen bestimmt wird.

5. Die motorgetriebene Trainingsmaschine nach Anspruch 1, wobei die Verarbeitungsmittel ferner konfiguriert sind, um eine oder mehrere Beschränkungen für Trainingsparameter der motorgetriebenen Trainingsmaschine für die Übung zu bestimmen, die zumindest teilweise auf den Informationen basieren, die mit dem Gelenk und/oder der oberen oder unteren Extremität des Benutzers verbunden sind.

6. Die motorgetriebene Trainingsmaschine nach einem der Ansprüche 1 bis 5, wobei die Verarbeitungsmittel ferner so konfiguriert sind, dass sie einen oder mehrere empfohlene Trainingsparameter für die Übung zumindest teilweise auf der Grundlage der mit dem Gelenk und/oder der oberen oder unteren Extremität des Benutzers verbundenen Informationen bestimmen, und wobei die Schnittstelle so konfiguriert ist, dass sie den einen oder die mehreren bestimmten empfohlenen Trainingsparameter zur Auswahl durch einen Benutzer anzeigt, und/oder
wobei die motorgetriebene Trainingsmaschine ferner so konfiguriert ist, dass sie mindestens einen empfohlenen Trainingsparameter für die Übung zumindest teilweise auf der Grundlage zusätzlicher Benutzerinformationen zur Auswahl durch einen Benutzer bestimmt, wobei die Daten ferner die zusätzlichen Benutzerinformationen aufweisen, die mindestens eine von einer individuellen Verletzungsgeschichte, einem Alter des Benutzers, einem Geschlecht des Benutzers, einer Größe des Benutzers, einem Gewicht des Benutzers und einer Sportart des Benutzers aufweisen.

7. Die motorgetriebene Trainingsmaschine nach einem der Ansprüche 1 bis 6, wobei die motorgetriebene Trainingsmaschine eine RFID-Leserkomponente aufweist, die so konfiguriert ist, dass sie automatisch einen dem Benutzer der motorgetriebenen Trainingsmaschine zugeordneten Tag identifiziert, oder
wobei der Benutzer der motorgetriebenen Trainingsmaschine auf der Grundlage einer Benutzereingabe identifiziert wird.

8. Die motorgetriebene Trainingsmaschine nach einem der Ansprüche 1 bis 7, wobei die dem Gelenk und/oder der oberen oder unteren Extremität des Benutzers zugeordnete Information Informationen über mindestens eine der folgenden Informationen aufweist: eine mit dem Gelenk und/oder der oberen oder unteren Extremität des Benutzers zusammenhängende Verletzung, eine mit der Verletzung zusammenhängende Zeit, gelenkspezifische und/oder für die obere oder untere Extremität spezifische Aspekte, eine Angabe über die Stabilität des Gelenks und/oder der oberen oder unteren Extremität des Benutzers, ein medizinischer Zustand bezüglich des Gelenks und/oder der oberen oder unteren Extremität des Benutzers, ein konzentrisch-exzentrisches Kraftverhältnis des Benutzers und ein Beuger-Strecker-Verhältnis des Benutzers.

9. Die motorgetriebene Trainingsmaschine nach einem der Ansprüche 1 bis 8, wobei die motorgetriebene Trainingsmaschine ferner so konfiguriert ist, dass sie mindestens eine bewegliche Komponente der motorgetriebenen Trainingsmaschine auf der Basis biometrischer Daten des Benutzers automatisch einstellt.

10. Die motorgetriebene Trainingsmaschine nach einem der Ansprüche 1 bis 9, wobei die Vielzahl vorhandener Trainingssysteme eines oder mehrere aufweist, nämlich ein plattenbelastetes Trainingssystem, ein Trainingssystem, das auf Gewichtsstapeln basiert, ein Trainingssystem, das auf einer muskelspezifischen, längenangepassten Variation des Drehmoments während der Bewegungen basiert, ein Trainingssystem, das auf elastischen Bändern basiert, ein Trainingssystem, das auf Hydraulikzylindern basiert, ein Trainingssystem, das auf Luftdruckzylindern basiert, und ein Trainingssystem, das auf einem Elektromotor basiert.

11. Die motorgetriebene Trainingsmaschine nach einem der Ansprüche 1 bis 10, wobei der mindestens eine Trainingsparameter mindestens eine maximale Widerstandskraft, eine maximale Geschwindigkeit, einen Bewegungsbereich und ein maximales Drehmoment definiert, und/oder
wobei der mindestens eine Trainingsparameter einen Bewegungsbereich für mindestens eine bewegliche Komponente der motorgetriebenen Trainingsmaschine definiert, und wobei die motorgetriebene Trainingsmaschine mindestens eines der folgenden Merkmale aufweist:
(i) eine Vielzahl von Lichtquellen, die so konfiguriert sind, dass sie den Bewegungsbereich für die mindestens eine bewegliche Komponente der motorgetriebenen Trainingsmaschine anzeigen,
(ii) eine erste Sicherheitskomponente, die so konfiguriert ist, dass sie die Bewegung des Benutzers auf der Grundlage des Bewegungsbereichs für die mindestens eine bewegliche Komponente der motorgetriebenen Trainingsmaschine elektronisch begrenzt, und
(iii) eine zweite Sicherheitskomponente, die so konfiguriert ist, dass sie die Bewegung des Benutzers auf der Grundlage des Bewegungsbereichs für die mindestens eine bewegliche Komponente der motorgetriebenen Trainingsmaschine mechanisch begrenzt.

12. Die motorgetriebene Trainingsmaschine nach einem der Ansprüche 1 bis 11, wobei jedes der Vielzahl von Belastungsprofilen mit mindestens einem von einem isometrischen Modus, einem isotonischen Modus und einem isokinetischen Modus verbunden ist.

13. Ein computerimplementiertes Verfahren, das die folgenden Schritte aufweist:
Empfangen (510) einer Identifikation eines Benutzers einer motorgetriebenen Trainingsmaschine nach Anspruch 1;
Erfassen (520) von Informationen über den Benutzer auf der Basis der Identifikation des Benutzers, wobei die Informationen über den Benutzer mindestens eines der folgenden Merkmale aufweist: ein Alter des Benutzers, ein Geschlecht des Benutzers, eine Größe des Benutzers, ein Gewicht des Benutzers, eine Sportart des Benutzers, eine Verletzung in Bezug auf ein Gelenk und/oder eine obere oder untere Extremität des Benutzers, eine Zeit in Bezug auf die Verletzung, Gelenk-spezifische und/oder obere oder untere Extremitäten-spezifische Aspekte, eine Angabe bezüglich einer Stabilität des Gelenks und/oder der oberen oder unteren Extremitätenausrichtung des Benutzers, einen medizinischen Zustand bezüglich des Gelenks und/oder der oberen oder unteren Extremitäten des Benutzers, ein konzentrisch-exzentrisches Kraftverhältnis des Benutzers und ein Beuger-Strecker-Verhältnis des Benutzers;
Empfangen (530), basierend auf einer oder mehreren Benutzereingaben, einer Auswahl eines bestehenden Trainingssystems aus einer Vielzahl von bestehenden Trainingssystemen für eine Übung und mindestens eines Trainingsparameters für die Übung;
Bestimmen (540), basierend auf der Information über den Benutzer, mindestens eine von einer oder mehreren Einschränkungen von Trainingsparametern für die Übung und einen Ausschluss einer Übung; und
Bestimmen (550) einer Alarmbedingung, wenn mindestens eine der Auswahl und des empfangenen mindestens einen Trainingsparameters oder ein Teil der Auswahl und des empfangenen mindestens einen Trainingsparameters unter die mindestens eine der einen oder mehreren Einschränkungen von Trainingsparametern für die Übung und den Ausschluss der Übung fällt.

14. Ein computerlesbares Speichermedium, das Anweisungen aufweist, die, wenn sie von einem Computer ausgeführt werden, den Computer veranlassen, die Schritte des Verfahrens nach Anspruch 13 auszuführen.

## Revendications

1. Machine d'entraînement motorisée (100) pour simuler une pluralité de systèmes d'entraînement existants (310 à 350) pour un exercice, la machine d'entraînement motorisée (100) comprenant :
une interface (120) configurée pour recevoir, sur la base d'une ou plusieurs entrées utilisateur, une sélection d'un système d'entraînement existant (310 à 350) parmi une pluralité de systèmes d'entraînement existants (310 à 350) pour un exercice et au moins un paramètre d'entraînement pour l'exercice, dans laquelle chacun de la pluralité de systèmes d'entraînement existants (310 à 350) pour l'exercice est associé à un profil de charge respectif d'une pluralité de profils de charge (312 à 352),
dans laquelle la machine d'entraînement motorisée (100) est configurée pour simuler le système d'entraînement existant (310 à 350) sélectionné, en commandant un ou plusieurs moteurs de la machine d'entraînement motorisée conformément au profil de charge respectif et audit au moins un paramètre d'entraînement reçu ;
**caractérisée par** des moyens de traitement configurés pour :
recevoir une identification d'un utilisateur (210) de la machine d'entraînement motorisée (100) ; et
obtenir des données comprenant des informations associées à une articulation et/ou un membre supérieur ou inférieur de l'utilisateur (210) sur la base de l'identification,
dans laquelle la machine d'entraînement motorisée (100) est en outre configurée pour déclencher au moins une alarme sur la base de la sélection et des informations associées à l'articulation et/ou au membre supérieur ou inférieur de l'utilisateur (210).

2. Machine d'entraînement motorisée selon la revendication 1, dans laquelle la machine d'entraînement motorisée est en outre configurée pour déclencher ladite au moins une alarme sur la base dudit au moins un paramètre d'entraînement reçu.

3. Machine d'entraînement motorisée selon la revendication 1 ou 2, dans laquelle ladite au moins une alarme comprend au moins l'un parmi :
un rappel concernant les informations associées à l'articulation et/ou au membre supérieur ou inférieur de l'utilisateur ;
une restriction concernant un ou plusieurs paramètres d'entraînement dudit au moins un paramètre d'entraînement ; et
une exclusion de l'exercice ou d'une simulation d'un système d'entraînement existant et/ou une suggestion d'un exercice différent ou d'un système d'entraînement existant différent.

4. Machine d'entraînement motorisée selon la revendication 3, dans laquelle le rappel représente un premier niveau de ladite au moins une alarme, la restriction représente un deuxième niveau de ladite au moins une alarme et l'exclusion représente un troisième niveau de ladite au moins une alarme, dans laquelle le niveau de ladite au moins une alarme est déterminé sur la base d'au moins l'un parmi la sélection, ledit au moins un paramètre d'entraînement reçu et les informations associées à l'articulation et/ou au membre supérieur ou inférieur de l'utilisateur.

5. Machine d'entraînement motorisée selon la revendication 1, dans laquelle les moyens de traitement sont en outre configurés pour déterminer une ou plusieurs restrictions pour des paramètres d'entraînement de la machine d'entraînement motorisée pour l'exercice sur la base, au moins en partie, des informations associées à l'articulation et/ou au membre supérieur ou inférieur de l'utilisateur.

6. Machine d'entraînement motorisée selon l'une des revendications 1 à 5, dans laquelle les moyens de traitement sont en outre configurés pour déterminer un ou plusieurs paramètres d'entraînement recommandés pour l'exercice sur la base, au moins en partie, des informations associées à l'articulation et/ou au membre supérieur ou inférieur de l'utilisateur, et dans laquelle l'interface est configurée pour afficher les un ou plusieurs paramètres d'entraînement recommandés déterminés pour sélection par un utilisateur, et/ou
dans laquelle la machine d'entraînement motorisée est en outre configurée pour déterminer au moins un paramètre d'entraînement recommandé pour l'exercice sur la base, au moins en partie, d'informations utilisateur supplémentaires pour sélection par un utilisateur, dans laquelle les données comprennent en outre les informations utilisateur supplémentaires, comprenant au moins l'un parmi un historique individuel de blessures, un âge de l'utilisateur, le sexe de l'utilisateur, une taille de l'utilisateur, un poids de l'utilisateur et un sport pratiqué par l'utilisateur.

7. Machine d'entraînement motorisée selon l'une des revendications 1 à 6, dans laquelle la machine d'entraînement motorisée comprend un composant lecteur d'identification radiofréquence, RFID, configuré pour identifier automatiquement une étiquette associée à l'utilisateur de la machine d'entraînement motorisée, ou
dans laquelle l'utilisateur de la machine d'entraînement motorisée est identifié sur la base d'une entrée utilisateur.

8. Machine d'entraînement motorisée selon l'une des revendications 1 à 7, dans laquelle les informations associées à l'articulation et/ou au membre supérieur ou inférieur de l'utilisateur comprennent des informations sur au moins l'un parmi une blessure associée à l'articulation et/ou au membre supérieur ou inférieur de l'utilisateur, une durée associée à la blessure, des aspects spécifiques à l'articulation et/ou au membre supérieur ou inférieur, une indication concernant une stabilité de l'articulation et/ou du membre supérieur ou inférieur de l'utilisateur, une condition médicale concernant l'articulation et/ou le membre supérieur ou inférieur de l'utilisateur, un rapport de force concentrique-excentrique de l'utilisateur, et un rapport fléchisseur-extenseur de l'utilisateur.

9. Machine d'entraînement motorisée selon l'une des revendications 1 à 8, dans laquelle la machine d'entraînement motorisée est en outre configurée pour ajuster automatiquement au moins un composant mobile de la machine d'entraînement motorisée sur la base de données biométriques de l'utilisateur.

10. Machine d'entraînement motorisée selon l'une des revendications 1 à 9, dans laquelle la pluralité de systèmes d'entraînement existants comprend un ou plusieurs parmi un système d'entraînement à charge libre, un système d'entraînement qui est basé sur des colonnes de poids, un système d'entraînement qui est basé sur une variation de couple adaptée à la longueur spécifique aux muscles lors de mouvements, un système d'entraînement qui est basé sur des bandes élastiques, un système d'entraînement qui est basé sur des cylindres hydrauliques, un système d'entraînement qui est basé sur des cylindres pneumatiques, et un système d'entraînement qui est basé sur un moteur électrique.

11. Machine d'entraînement motorisée selon l'une des revendications 1 à 10, dans laquelle ledit au moins un paramètre d'entraînement définit au moins l'un parmi une force résistive maximale, une vitesse maximale, une amplitude de mouvement et un couple maximal, et/ou
dans laquelle ledit au moins un paramètre d'entraînement définit une amplitude de mouvement pour au moins un composant mobile de la machine d'entraînement motorisée, et dans laquelle la machine d'entraînement motorisée comprend au moins l'un parmi :
(i) une pluralité de sources lumineuses configurées pour indiquer l'amplitude de mouvement pour ledit au moins un composant mobile de la machine d'entraînement motorisée,
(ii) un premier composant de sécurité configuré pour restreindre électroniquement le mouvement de l'utilisateur sur la base de l'amplitude de mouvement pour ledit au moins un composant mobile de la machine d'entraînement motorisée, et
(iii) un second composant de sécurité configuré pour restreindre mécaniquement le mouvement de l'utilisateur sur la base de l'amplitude de mouvement pour ledit au moins un composant mobile de la machine d'entraînement motorisée.

12. Machine d'entraînement motorisée selon l'une des revendications 1 à 11, dans laquelle chacun de la pluralité de profils de charge est associé à au moins l'un parmi un mode isométrique, un mode isotonique et un mode isocinétique.

13. Procédé mis en œuvre par ordinateur comprenant les étapes consistant à :
recevoir (510) une identification d'un utilisateur d'une machine d'entraînement motorisée selon la revendication 1 ;
obtenir (520) des informations sur l'utilisateur sur la base de l'identification de l'utilisateur, dans lequel les informations sur l'utilisateur comprennent au moins l'un parmi un âge de l'utilisateur, le sexe de l'utilisateur, une taille de l'utilisateur, un poids de l'utilisateur, un sport pratiqué par l'utilisateur une blessure associée à une articulation et/ou à un membre supérieur ou inférieur de l'utilisateur, une durée associée à la blessure, des aspects spécifiques à l'articulation et/ou au membre supérieur ou inférieur, une indication concernant une stabilité de l'articulation et/ou du membre supérieur ou inférieur de l'utilisateur, une condition médicale concernant l'articulation et/ou le membre supérieur ou inférieur de l'utilisateur, un rapport de force concentrique-excentrique de l'utilisateur, et un rapport fléchisseur-extenseur de l'utilisateur ;
recevoir (530), sur la base d'une ou plusieurs entrées utilisateur, une sélection d'un système d'entraînement existant parmi une pluralité de systèmes d'entraînement existants pour un exercice et au moins un paramètre d'entraînement pour l'exercice ;
déterminer (540), sur la base des informations sur l'utilisateur, au moins l'une parmi une ou plusieurs restrictions de paramètres d'entraînement pour l'exercice et une exclusion d'un exercice ; et
déterminer (550) une condition d'alarme lorsqu'au moins l'un parmi la sélection et ledit au moins un paramètre d'entraînement reçu ou une partie de la sélection et dudit au moins un paramètre d'entraînement reçu chute sous ladite au moins l'une parmi les une ou plusieurs restrictions de paramètres d'entraînement pour l'exercice et l'exclusion de l'exercice.

14. Support de stockage lisible par ordinateur comprenant des instructions qui, lorsqu'elles sont exécutées par un ordinateur, amènent l'ordinateur à effectuer les étapes du procédé selon la revendication 13.
